# EUROPÄISCHE PATENTANMELDUNG

(11) **EP 1 283 117 A2**
(43) Veröffentlichungstag der Anmeldung: **12.02.2003**
(21) Anmeldenummer: 02014504.1
(22) Anmeldetag: 29.06.2002
(51) Int. Cl.: B60H 1/00

(54) **Kraftfahrzeug, insbesondere PKW, mit einer Belüftungseinrichtung**

(30) Priorität: 09.08.2001 DE 20113225 U
(71) Anmelder: Paschke, Uwe, 30974 Wennigsen (DE)
(72) Erfinder: Paschke, Uwe, 30974 Wennigsen (DE)
(74) Vertreter: Wagner, Carsten

(57) **Zusammenfassung**

Ein Kraftfahrzeug, insbesondere PKW, weist eine Belüftungseinrichtung (2) zur Belüftung und/oder Klimatisierung des Innenraumes des Kraftfahrzeuges auf. Erfindungsgemäß ist eine Solarzellenanordnung (12) zum Aufladen eines Energiespeichers (6, 18) vorgesehen, der die Belüftungseinrichtung (2) speist. Auf diese Weise ist sichergestellt, daß die Belüftungseinrichtung (2) auch bei ausgeschaltetem Motor betrieben werden kann, ohne daß die Gefahr besteht, daß sich die Fahrzeugbatterie so stark entlädt, daß ein Starten des Kraftfahrzeuges nicht mehr möglich ist.

## Beschreibung

Die Erfindung betrifft ein Kraftfahrzeug, insbesondere PKW, der im Oberbegriff des Anspruchs 1 genannten Art.

Moderne Kraftfahrzeuge sind zunehmend serienmäßig mit einer Klimaanlage ausgestattet, die insbesondere bei höheren Außentemperaturen im Sommer für eine ausreichende Belüftung und Klimatisierung des Innenraumes des Kraftfahrzeuges sorgt und somit eine übermäßige Erwärmung des Innenraumes des Kraftfahrzeuges, die die Insassen körperlich belastet, vermeidet. Die Klimaanlage wird in der Regel von der Fahrzeugbatterie des Kraftfahrzeuges gespeist, die während der Fahrt über die Lichtmaschine aufgeladen wird.

Ein Nachteil der bekannten Kraftfahrzeuge besteht darin, daß die Klimaanlage bei ausgeschaltetem Motor nicht längere Zeit betrieben werden kann, da sich aufgrund der hohen Leistungsaufnahme der Klimaanlage die Fahrzeugbatterie schnell entladen würde. Dies hat zur Folge, daß sich bei ausgeschaltetem Motor und ausgeschalteter Klimaanlage der Innenraum des Fahrzeuges in unerwünschter Weise stark erwärmt. Dies führt zu einer körperlichen Belastung der Insassen und macht die Vorteile, die sich durch eine Klimaanlage ergeben, zunichte. Ein weiterer Nachteil besteht darin, daß die Insassen des Kraftfahrzeugs bei starker Sonneneinstrahlung und ausgeschalteter Klimaanlage zu schwitzen beginnen. Bei einem darauf folgenden Einschalten der Klimaanlage wird die Temperatur im Innenraum des Kraftfahrzeuges schnell auf einen gewählten Wert verringert, so daß die Gefahr besteht, daß sich die Insassen erkälten. Diese Gefahr besteht insbesondere deshalb, weil die Klimaanlage nach dem Einschalten zunächst mit höchster Leistung arbeitet, um den Innenraum des Fahrzeuges möglichst schnell abzukühlen. Dies führt zu entsprechend starken Luftströmungen im Innenraum des Kraftfahrzeugs.

Der Erfindung liegt die Aufgabe zugrunde, ein Kraftfahrzeug der im Oberbegriff des Anspruchs 1 genannten Art anzugeben, das diesen Nachteil nicht aufweist, bei dem also auch bei ausgeschaltetem Motor eine ausreichende Belüftung des Innenraumes des Kraftfahrzeuges erzielbar ist.

Diese Aufgabe wird durch die im Anspruch 1 angegebene Lehre gelöst.

Der Grundgedanke der erfindungsgemäßen Lehre besteht darin, zum Aufladen eines elektrischen Energiespeichers, der die Belüftungseinrichtung des Kraftfahrzeugs speist, Solarenergie zu verwenden.

Erfindungsgemäß ist somit der Energiespeicher, der die Belüftungseinrichtung speist, unabhängig von dem Motor des Kraftfahrzeuges aufladbar, also beispielsweise auch im Stand bei ausgeschaltetem Motor. Auf diese Weise ist sichergestellt, daß die Belüftungseinrichtung auch bei ausgeschaltetem Motor betrieben werden kann, ohne daß die Gefahr besteht, daß sich die Fahrzeugbatterie so stark entlädt, daß ein Starten des Kraftfahrzeuges nicht mehr möglich ist.

Die zum Betrieb der Belüftungseinrichtung erforderliche Solarenergie steht bei Sonneneinstrahlung in ausreichendem Maße zur Verfügung, also immer dann, wenn in der Regel die Belüftungseinrichtung benötigt wird, um eine übermäßige Erwärmung des Innenraumes des Kraftfahrzeugs zu vermeiden.

Falls die Speicherkapazität des verwendeten elektrischen Energiespeichers es zuläßt, kann die Belüftungseinrichtung durch die Klimaanlage des Kraftfahrzeugs gebildet sein. Die Belüftungseinrichtung kann jedoch auch durch einen elektromotorisch betriebenen Lüfter gebildet sein. Derartige Lüfter stehen als einfache und kostengünstige Standardbauteile zur Verfügung, deren Leistungsaufnahme gering genug ist, um sie mittels eines ausschließlich durch Solarenergie aufgeladenen Energiespeichers zu speisen.

Eine vorteilhafte Weiterbildung der erfindungsgemäßen Lehre sieht vor, daß die Belüftungseinrichtung eine Klimaanlage und wenigstens einen zusätzlichen Lüfter aufweist, der durch den Energiespeicher speisbar ist. Bei dieser Ausführungsform kann bei laufendem Motor die Klimaanlage betrieben werden, während bei ausgeschaltetem Motor der zusätzliche Lüfter betrieben wird und für eine Luftzirkulation im Innenraum des Kraftfahrzeuges sorgt, die eine übermäßige Erwärmung des Innenraumes verhindert. Entsprechend den Anforderungen der Belüftungseinrichtung ist die Fläche der Solarzellenanordnung in weiten Grenzen wählbar.

Die Solarzellenanordnung kann an beliebiger geeigneter Stelle an dem Kraftfahrzeug angeordnet sein. Zweckmäßigerweise ist die Solarzellenanordnung auf dem Dach des Kraftfahrzeuges angeordnet. Auf diese Weise sind Abschattungen der Solarzellenanordnung so weit wie möglich vermieden.

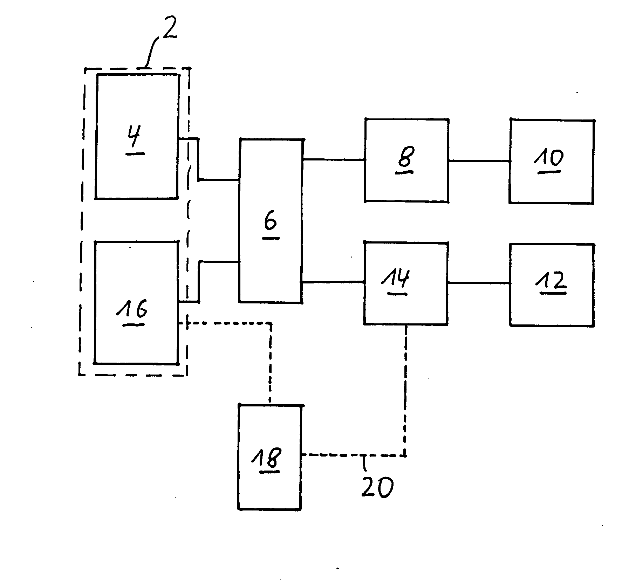

Die Erfindung wird nachfolgend anhand der beigefügten Zeichnung näher erläutert, deren einzige Figur ein stark schematisiertes Blockschaltbild einer Belüftungseinrichtung eines erfindungsgemäßen Kraftfahrzeugs darstellt.

Ein in der Zeichnung nicht dargestelltes Kraftfahrzeug weist eine elektrisch betreibbare Belüftungseinrichtung 2 auf, die eine Klimaanlage 4 aufweist. Die Spannungsversorgung der Klimaanlage 4 erfolgt über einen elektrischen Energiespeicher, der bei diesem Ausführungsbeispiel durch eine Fahrzeugbatterie 6 des Kraftfahrzeugs gebildet ist. Die Fahrzeugbatterie 6 ist über eine Ladeschaltung 8 mit einer Lichtmaschine 10 des Kraftfahrzeugs verbunden und wird bei Betrieb des Motors von dieser aufgeladen.

Erfindungsgemäß weist das Kraftfahrzeug eine auf dessen Dach angeordnete Solarzellenanordnung 12 auf, die über eine weitere Ladeschaltung 14 mit der Fahrzeugbatterie 6 in Verbindung steht und bei entsprechender Sonneneinstrahlung die Fahrzeugbatterie 6 auflädt. Erfindungsgemäß weist die Belüftungseinrichtung 2 ferner einen zusätzlichen elektrisch betreibbaren Lüfter 16 auf, der von der Fahrzeugbatterie 6 gespeist wird. Alternativ hierzu kann die Speisung des Lüfters 16 auch nicht über die Fahrzeugbatterie 6, sondern über einen separaten Akkumulator 18 erfolgen, der dann mit der Ladeschaltung 14 verbunden ist, wie dies in der Zeichnung durch eine gestrichelte Linie 20 angedeutet ist.

Die Funktionsweise der erfindungsgemäßen Belüftungseinrichtung 2 ist wie folgt:
Bei laufendem Motor wird die Klimaanlage 4 betrieben, wobei die Lichtmaschine 10 die Fahrzeugbatterie 6 ständig auflädt.
Bei ausgeschaltetem Motor und ausgeschalteter Klimaanlage 4 kann der Benutzer den Lüfter 16 einschalten, dessen Spannungsversorgung der Akkumulator 18 bildet. Eine aus der Energieaufnahme des Lüfters 16 resultierende Entladung des Akkumulators 18 wird dadurch kompensiert, daß der Akkumulator 18 über die Solarzellenanordnung 12 und die weitere Ladeschaltung 14 bei entsprechender Sonneneinstrahlung geladen wird. Durch den Lüfter 16 ist auch bei ausgeschaltetem Motor eine ausreichende Belüftung bzw. Klimatisierung des Fahrzeuginnenraumes erzielt.
Bei entsprechender Kapazität der Fahrzeugbatterie 6 ist es auch möglich, auf den zusätzlichen Lüfter 16 zu verzichten und vielmehr die Klimaanlage 4 auch im Stand mittels der Fahrzeugbatterie 6 zu speisen, die im Stand über die Solarzellenanordnung 12 und die Ladeschaltung 14 geladen wird.
Die erfindungsgemäße Belüftungseinrichtung 2 ist einfach im Aufbau und damit kostengünstig herstellbar. Sie ist in beliebige Kraftfahrzeuge einbaubar.

## Patentansprüche

1. Kraftfahrzeug, insbesondere PKW,
mit einer Belüftungseinrichtung zur Belüftung und/oder Klimatisierung des Innenraumes des Kraftfahrzeuges,
**gekennzeichnet durch**
eine Solarzellenanordnung (12) zum Aufladen eines Energiespeichers (6, 18), der die Belüftungseinrichtung (2) speist.

2. Kraftfahrzeug nach Anspruch 1, **dadurch gekennzeichnet, daß** die Belüftungseinrichtung (2) eine Klimaanlage (4) und wenigstens einen zusätzlichen Lüfter (16) aufweist, den der Energiespeicher (6, 18) speist.

3. Kraftfahrzeug nach Anspruch 1, **dadurch gekennzeichnet, daß** die Solarzellenanordnung (12) auf dem Dach des Kraftfahrzeuges angeordnet ist.
